# EUROPÄISCHE PATENTSCHRIFT

(11) **EP 0 638 453 B1**
(45) Veröffentlichungstag und Bekanntmachung des Hinweises auf die Patenterteilung: **23.10.1996**
(21) Anmeldenummer: 94110450.7
(22) Anmeldetag: 05.07.1994
(51) Int. Cl.: B60J 7/12

(54) **Versenkbares Faltverdeck für ein Cabriolet-Fahrzeug**
Stowable soft top for convertible vehicle
Toit pliant pouvant être rangé pour véhicule convertible

(30) Priorität: 07.08.1993 DE 9311798 U
(43) Veröffentlichungstag der Anmeldung: 15.02.1995
(73) Patentinhaber: Wilhelm Karmann GmbH, D-49084 Osnabrück (DE)
(72) Erfinder: Rothe, Karl, D-49565 Bramsche (DE); Lehnig, Frank, D-49086 Osnabrück (DE); Klemme, Heiko, D-49090 Osnabrück (DE)
(74) Vertreter: Busse & Busse Patentanwälte

(56) Entgegenhaltungen:
- FR-A- 2 661 140
- US-A- 2 322 839
- US-A- 3 030 140

## Beschreibung

Die Erfindung bezieht sich auf ein versenkbares Faltverdeck für ein Cabriolet-Fahrzeug nach dem Oberbegriff des Anspruchs 1.

Bei bekannten versenkbaren Faltverdecks für Cabriolet-Fahrzeuge wird das im Heckbereich mit einem Verdeckstoffspannbügel versehene Faltverdeck in der Schließstellung auf dem Verdeckkastendeckel in seiner Auflagestellung verriegelt, wobei jeweils Verschlußzapfen mit einer Gabeldrehfalle eines Drehfallenverschlusses zusammenwirken und der Verdeckkastendeckel über einen hydraulischen Antrieb in die Öffnungs- bzw. Schließstellung Schwenkbar ist. Die dazu vorgesehenen hydraulischen Antriebszylinder als Antriebsglieder sind im Karosseriebereich unterhalb der Kotflügel bzw. der Heckklappe angeordnet, so daß sowohl der konstruktive Aufwand als auch der Platzbedarf nachteilig erhöht und derartige Lösungen insbesondere für viersitzige Cabriolet-Fahrzeuge wenig geeignet sind.

Der Erfindung liegt die Aufgabe zugrunde, ein versenkbares Faltverdeck für ein Cabriolet-Fahrzeug zu schaffen, dessen mit geringem technischen Aufwand bewegbare und raumsparend angeordnete Antriebsglieder eine schonende und zuverlässig dichte Festlegung des Faltverdecks auf dem Verdeckkastendeckel ermöglichen.

Ausgehend von einem versenkbaren Faltverdeck nach dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 10 verwiesen.

Mit der erfindungsgemäßen Ausbildung des versenkbaren Faltverdecks mit der für eine gemeinsame Bewegung des Verdeckstoffspannbügels und des Verdeckkastendeckels nutzbaren Betätigungsvorrichtung ist mit geringem konstruktiven Aufwand eine Wirkverbindung dieser Bauteile derart möglich, daß sowohl eine Vereinfachung der Verschlußmittel als auch mit geringem Aufwand eine automatische Steuerung der Ver- und Entriegelung des Verdeckstoffspannbügels und des Verdeckkastendeckels erreichbar sind.

Mit der Betätigungsvorrichtung kann dem Verdeckkastendeckel während des Schließvorgangs eine Schwenk/Schub-Bewegung vermittelt werden, mit der bei gleichzeitigem Verbindungseingriff von Schließteil und Verschlußvorrichtung dem Faltverdeck insgesamt eine materialschonende gleichmäßige Verdeckstoffspannung vermittelbar ist und damit das Faltverdeck im geschlossenen Zustand eine faltenfreie glatte Dachhautkontur darbietet, die eine Verringerung der Fahrgeräusche ermöglicht.

Die mit geringem Aufwand antreibbare Betätigungsvor richtung kann mit einer kleinbauenden Antriebseinheit versehen werden, so daß ein derartiges Faltverdeck vorteilhaft für viersitzige Cabriolet-Fahrzeuge mit beengten Platzverhältnissen im Heckbereich des Fahrzeugs einsetzbar ist.

Weitere Einzelheiten und Vorteile der Erfindung ergeben sich aus der nachfolgenden Beschreibung und der Zeichnung, die ein Ausführungsbeispiel eines erfindungsgemäßen versenkbaren Faltverdecks schematisch veranschaulicht. In der Zeichnung zeigen:
- Fig. 1: eine teilweise aufgebrochene Heckansicht eines Cabriolet-Fahrzeugs mit einem Faltverdeck in Schließstellung,
- Fig. 2: eine Seitenansicht des Heckbereichs gemäß einer Linie II-II in Fig. 1,
- Fig. 3: eine Heckansicht ähnlich Fig. 1 mit einem Verdeckkastendeckel in Öffnungsstellung,
- Fig. 4: eine perspektivische Ansicht ähnlich Fig. 3 mit in einer Schließphase Zusammenwirkendem Verdeckkastendeckel und Faltverdeck,
- Fig. 5: eine geschnittene Seitenansicht des Heckbereichs gemäß einer Linie V-V in Fig. 4,
- Fig. 6: eine perspektivische Einzeldarstellung eines am Verdeckkastendeckel vorgesehenen Umlenkhebels,
- Fig. 7: eine perspektivische Einzeldarstellung eines zwischen Verdeckkastendeckel und Fahrzeugkarosserie vorgesehenen Parallelogramm-Scharnieres,
- Fig. 8: eine perspektivische Einzeldarstellung einer Verschlußvorrichtung mit Schließteil, und
- Fig. 9: eine Seitenansicht eines in einem Gegenlager eingreifenden Fanghakens.

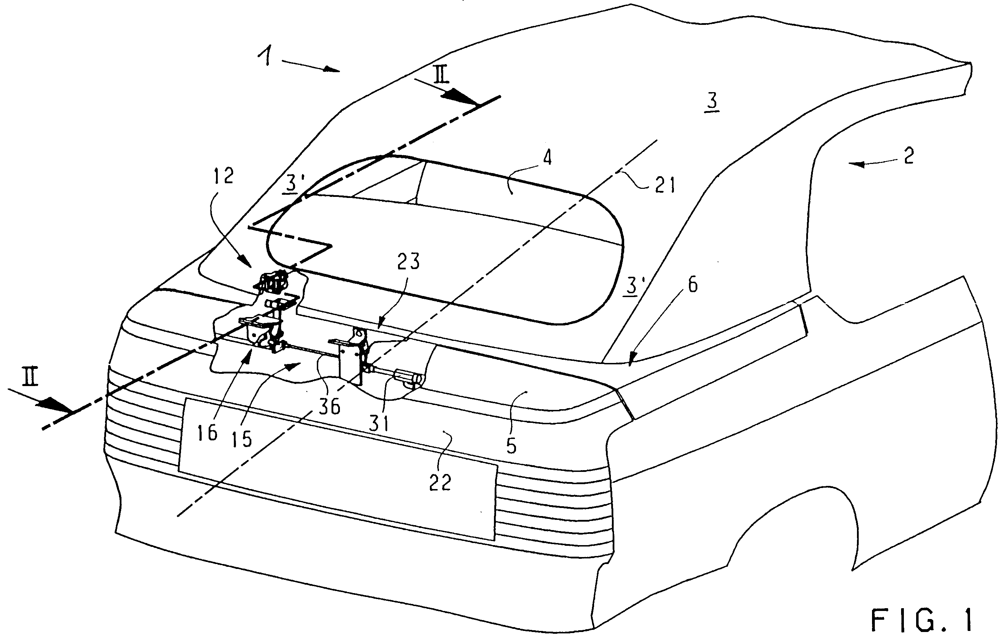

In Fig. 1 ist ein Heckbereich eines insgesamt mit 1 bezeichneten Cabriolet-Fahrzeugs veranschaulicht, dessen geschlossenes Faltverdeck 2 eine in die Dachhaut 3 integrierte Heckscheibe 4 aufweist, unterhalb der das Faltverdeck 2 auf einem mit einem Kofferraumdeckel 5 in einer Ebene befindlichen Verdeckkastendeckel 6 abgelegt ist.

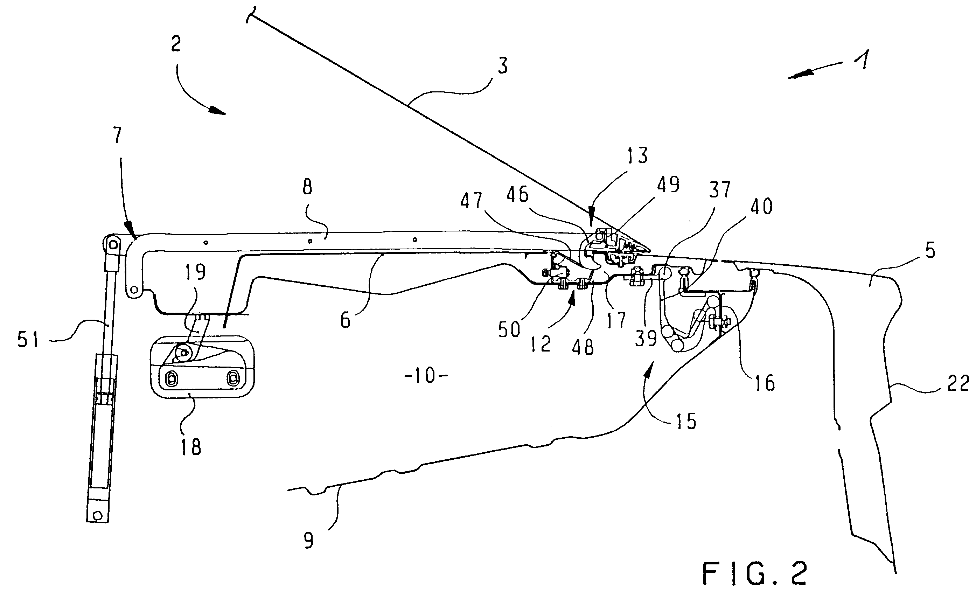

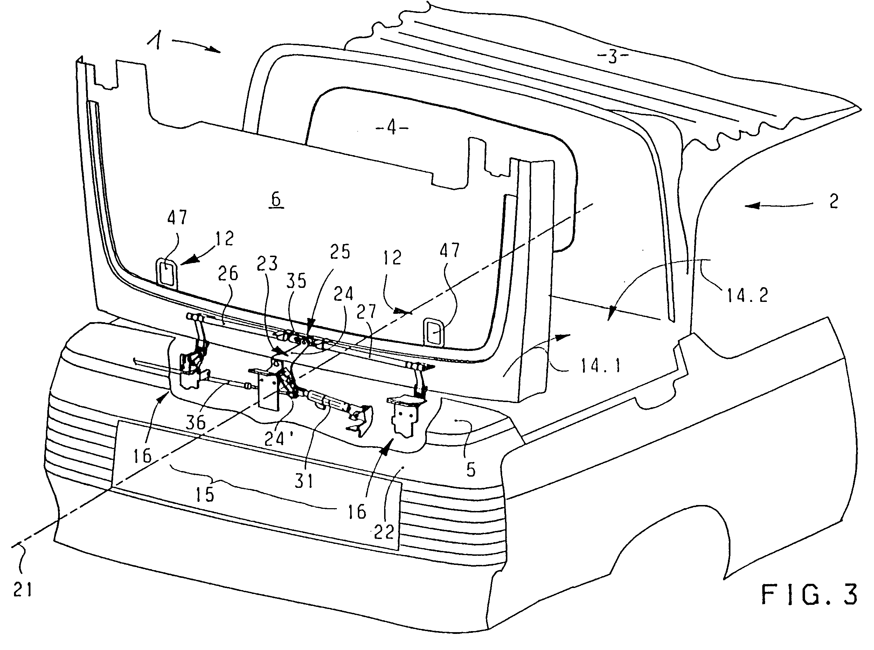

Die geschnittene Seitenansicht gemäß Fig. 2 verdeutlicht in Zusammenschau mit Fig. 1, daß das Faltverdeck 2 mit einem Verdeckgestell 7 versehen ist, dessen hinterer Abschluß von einem U-förmigen Verdeckstoffspannbügel 8 gebildet ist. Unterhalb einer vom Verdeckkastendeckel 6 gebildeten Auflageebene ist über einer Verdeckwanne 9 ein Verdeckkasten 10 gebildet, in den das gefaltete Verdeck 2 für eine offene Fahrstellung des Cabriolet-Fahrzeugs (nicht dargestellt) einschwenkbar ist. Dazu wird der in Schließstellung befindliche Verdeckkastendeckel 6 (Fig. 1) nach dem Abheben des Faltverdecks 2 in eine Öffnungsstellung (Fig. 3) geschwenkt, das Faltverdeck 2 in den Verdeckkasten 10 eingelegt und danach mittels des Verdeckkastendeckels 6 abgedeckt.

Für eine nachfolgende geschlossene Benutzung des Cabriolet-Fahrzeugs wird in umgekehrter Reihenfolge zum vorbeschriebenen Faltvorgang der Verdeckkastendeckel 6 geöffnet, das Faltverdeck 2 mittels des Verdeckgestells 7 herausgeschwenkt, in die einerseits am Windschutzscheibenrahmen (nicht dargestellt) anliegende Schließstellung (Fig. 1) verbracht und in dieser andererseits das Faltverdeck 2 über zumindest ein am Verdeckstoffspannbügel 8 befindliches und in eine jeweilige Verschlußvorrichtung 12 eingreifendes Schließteil 13 in der Auflagestellung auf dem Verdeckkastendeckel 6 festgelegt (Fig. 2).

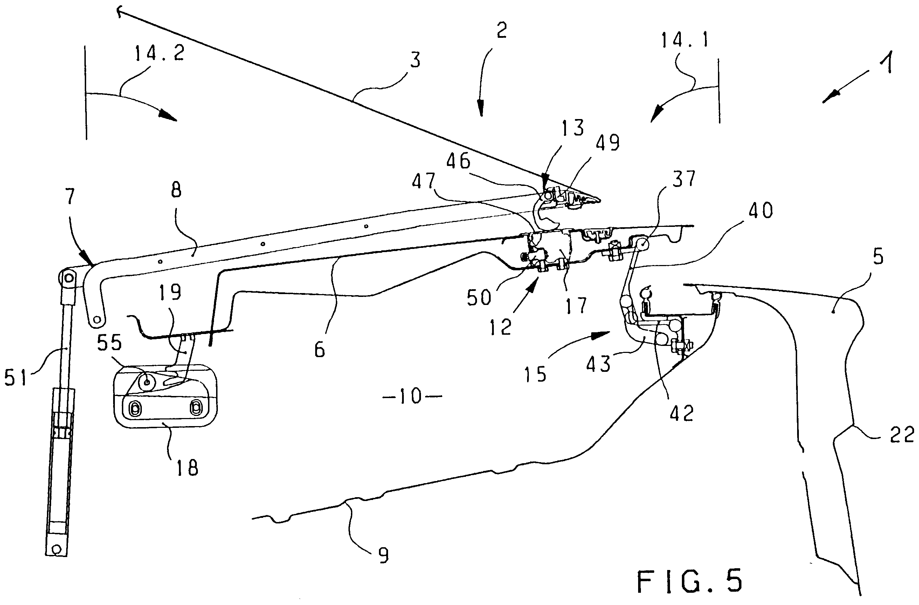

Die aufgebrochene Ausschnittsdarstellung in Fig. 1 verdeutlicht, daß der Verdeckkastendeckel 6 für diese automatischen Bewegungen in vorteilhafter Ausbildung mit einer insgesamt mit 15 bezeichneten Betätigungsvorrichtung versehen ist, die dem Verdeckkastendeckel 6 während des Schließvorgangs im Bereich jeweiliger Schwenkhalterungen 16 zumindest phasenweise eine horizontale Steuerbewegung so vermittelt, daß das Schließteil 13 am Verdeckstoffspannbügel 8 von der Verschlußvorrichtung 12 ergriffen (Fig. 5) und das Faltverdeck 2 mit einer Vorspannung in die Auflagestellung (Fig. 1) bewegt wird.

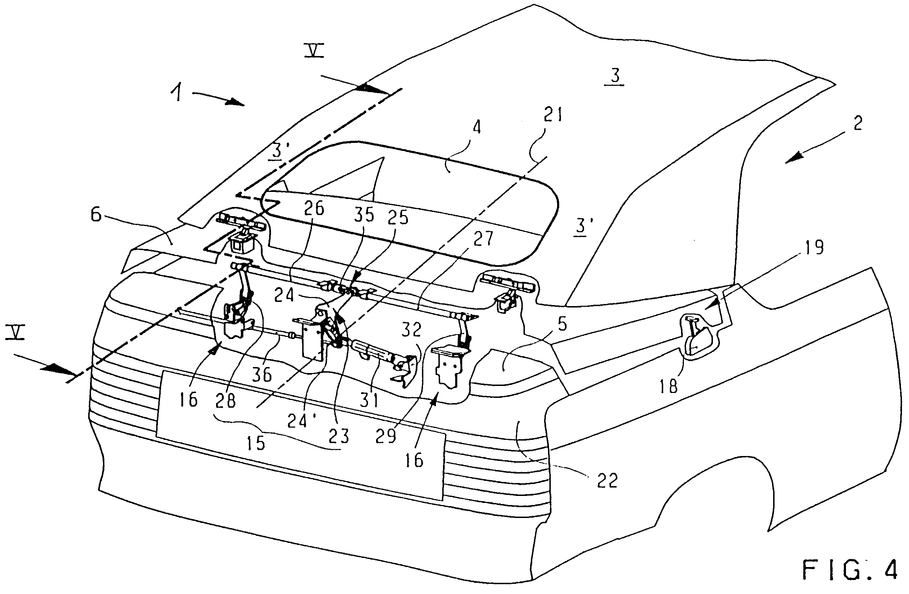

Die jeweiligen Bewegungsphasen in Fig. 3 und Fig. 4 machen deutlich, daß einerseits der Verdeckkastendeckel 6 in Pfeilrichtung 14.1 mittels der Betätigungsvorrichtung 15 und andererseits das Faltverdeck 2 mittels des Verdeckgestells 7 in Pfeilrichtung 14.2 beim Schließvorgang so geschwenkt werden, daß das Schließteil 13 in eine die Bewegungsbahn der Verschlußvorrichtung 12 kreuzende Klappstellung (Fig. 5) gelangt, in der das Schließteil 13 in einer jeweiligen Rastöffnung 17 von der Verschlußvorrichtung 12 erfaßt und in dieser Verbindungsstellung das Faltverdeck 2 und der Verdeckkastendeckel 6 gemeinsam über eine Schwenk/Schub-Bewegung in die den Verdeckstoff 3 spannende Auflagestellung verbringbar sind.

Mit diesem Wirkzusammenhang der Bauteile des Verdeckgestells 7 und des Verdeckkastendeckels 6 weist das Cabriolet-Fahrzeug 1 insgesamt eine faltenfreie und glatte Außenkontur im Bereich der Dachhaut 3 (Fig. 1) auf und bei hohen Fahrgeschwindigkeiten ist so im geschlossenen Zustand eine weitgehende Geräuschverminderung erreichbar. Die Heckscheibe 4 kann in einer festen und beheizbaren Ausbildung so in den hinteren Bereich der Dachhaut 3 integriert werden, daß nur in schmalen Randbereichen 3' ein vorteilhaft gering eingeschränktes Sichtfeld gebildet ist.

Die Seitenansichten gemäß Fig. 2 und Fig. 5 verdeutlichen, daß der Verdeckkastendeckel 6 mit zwei an dessen vorderen Randbereichen symmetrisch zur Fahrzeuglängsachse angeordneten und in der Schließstellung in jeweils ein karosserieseitig gehaltenes Gegenlager 18 eingreifenden Fanghaken 19 versehen ist. Damit ist zusätzlich zu der im Bereich der Verschlußvorrichtung 12 und des Schließteiles 13 gebildeten Verriegelung eine weitere Stabilisierung des Verdeckkastendeckels 6 erreicht und die Dichtigkeit im Auflagebereich des Verdeckstoffspannbügels 8 auf den Verdeckkastendeckel 6 auch bei hohen Fahrgeschwindigkeiten gewährleistet.

Die aufgebrochene Darstellung des Heckbereichs gemäß Fig. 4 verdeutlicht, daß die Betätigungsvorrichtung 15 mit einem innenseitig im Bereich der Fahrzeuglängsachse 21 am Karosserieheck 22 abgestützten Umlenkhebel 23 versehen ist, der an einem ersten freien Schenkel 24 ein zum Verdeckkastendeckel 6 hin gerichtetes Verbindungsglied 25 aufweist, das über jeweils senkrecht zur Fahrzeuglängsachse 21 abragende Querstreben 26,27 mit einerseits randseitig am Karosserieheck 22 abgestützten und andererseits den Verdeckkastendeckel 6 haltenden Parallelogramm-Scharnieren 28,29 verbunden ist.

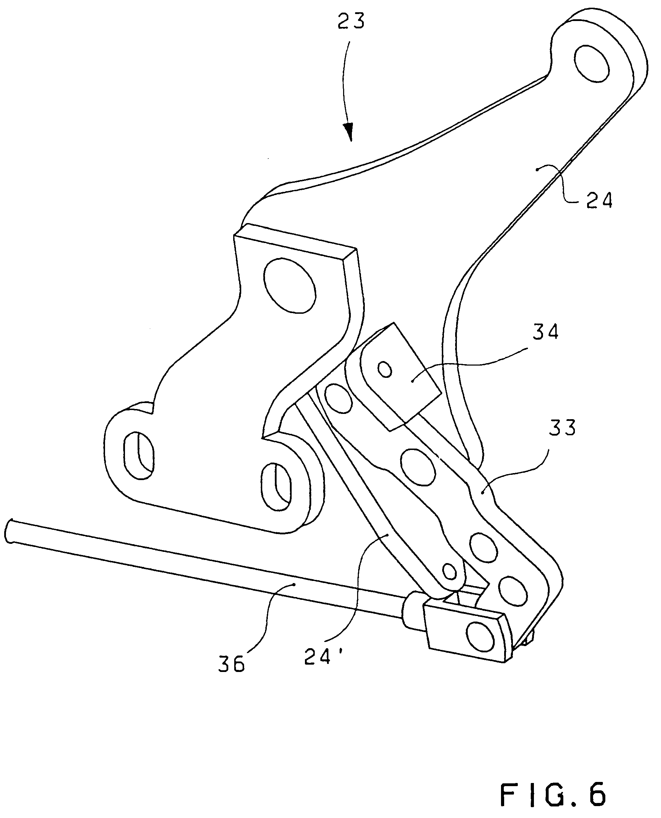

Der Umlenkhebel 23 ist dabei in zweckmäßiger Ausführungsform im Bereich seines zweiten freien Schenkels 24' mit einem als Hydraulikzylinder ausgebildeten Antriebsglied 31 versehen, das einerseits über ein Stützteil 32 am Karaosserieheck 22 gehalten und andererseits an einem Übertragungshebel 33 (Fig. 6) so angelenkt ist, daß über diesen eine Bewegungseinleitung auf den Umlenkhebel 23 erreichbar ist. Der Bewegungsbereich des Übertragungshebels 33 ist dabei über ein Anschlagteil 34 begrenzt.

Im Bereich des Verbindungsgliedes 25 weist der Umlenkhebel 23 in zweckmäßiger Ausführung einen in einer Nut geführter Druckbolzen als Gleitpaarungsteile 35 auf, womit den beiden Querstreben 26,27 bei einer Bewegungseinleitung gleichzeitig eine reversible Drehbewegung vermittelbar und so eine automatische Öffnung- bzw. Schließbewegung als Verdeckkastendeckel 6 erreichbar ist.

Die vergrößerte Einzeldarstellung des Umlenkhebels 23 gemäß Fig. 6 verdeutlicht, daß zur Bewegungseinleitung auf den Übertragungshebel 33 auch ein Bowdenzug 36 vorgesehen sein kann, mit dem gleichzeitig eine Notverriegelung der Bauteile erreichbar ist. Ebenso ist denkbar, den Bowdenzug 36 anderenends mit einem Antriebsglied (nicht dargestellt) zu versehen, das raumsparend im seitlichen Karosseriebereich angeordnet sein kann.

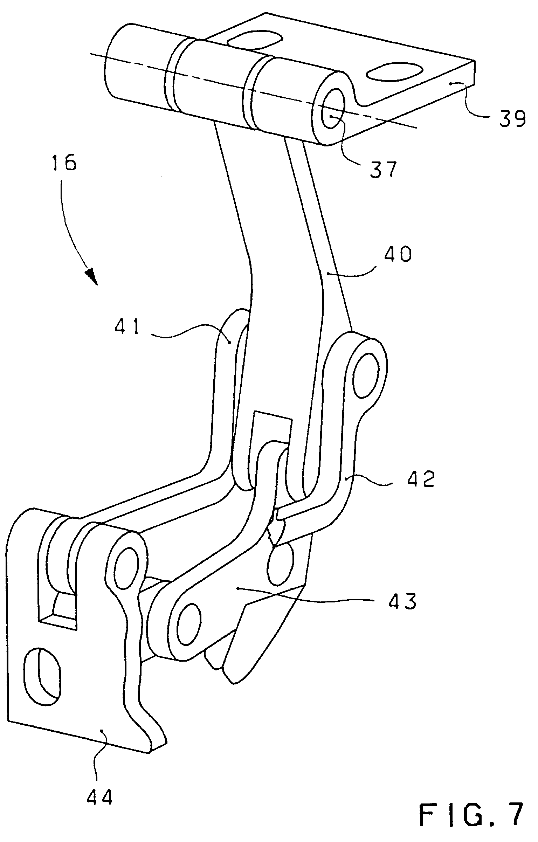

Die über die Gleitpaarungsteile 35 im Bereich des Verbindungsgliedes 25 eingeleitete Stellbewegung für den Verdeckkastendeckel 6 wird über die Querstreben 26,27 auf die an deren Endbereichen befindliche Parallelogramm-Scharniere 28,29 dadurch übertragen, daß die Endbereiche der Querstreben 26,27 mit den Scharnieren in Form jeweiliger Scharnierdorne 37 verbunden sind (Fig. 7).

Die Parallelogramm-Scharniere 28,29 ihrerseits weisen im Bereich der Scharnierdorne 37 (Fig. 7) eine am Verdeckkastendeckel 6 (nicht dargestellt) festgelegte Halteplatte 39 auf, die mit einem von dieser abragenden Verbindungshebel 40 mit zwei symmetrischen, randseitig angeordneten Steuerhebeln 41,42 versehen ist. Zwischen den Steuerhebeln 41,42 ist am Verbindungshebel 40 ein Zughebel 43 gelagert, der gemeinsam mit den beiden Steuerhebeln 41,42 schwenkbeweglich an einem Lagerbock 44 am Karosserieheck 22 abgestützt ist.

Mit einem derartig aufgebauten Parallelogramm-Scharnier 16 kann die vorbeschriebene Schwenk/Schub-Bewegung mit hoher Führungsgenauigkeit auf den Verdeckkastendeckel 6 eingeleitet und mit geringem Aufwand eine schonende Verspannung des Faltverdecks 2 in der Verbindungsstellung mit dem Verdeckkastendeckel 6 erreicht werden.

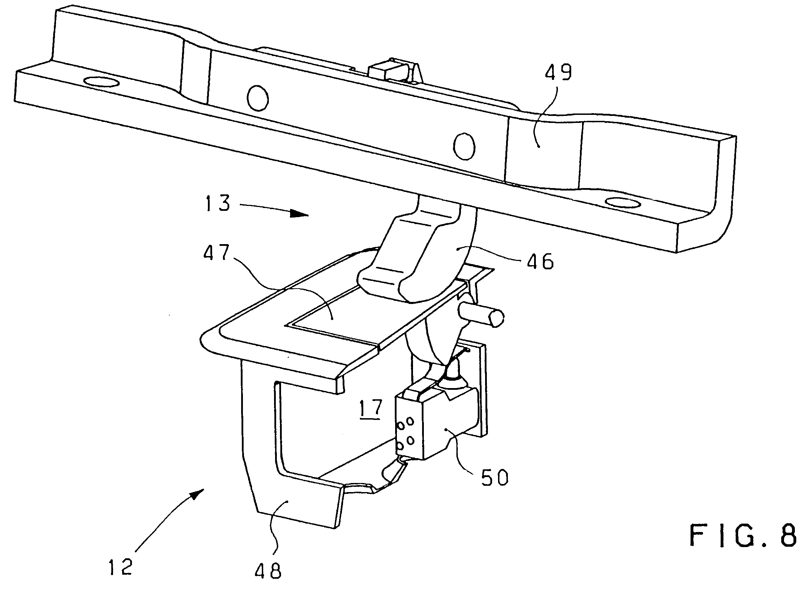

Die vergrößerte Einzeldarstellung der Verschlußvorrichtung 12 gem. Fig. 8 verdeutlicht, daß diese in zweckmäßiger Ausführung als ein den als Rasthaken-46 ausgebildeten Schließteil 13 über eine Klappe 47 aufnehmender Verriegelungstopf 48 ausgebildet ist. Der über ein Tragteil 49 am Verdeckstoffspannbügel 8 (Fig. 5) abgestützte Rasthaken 46 wird während des Verriegelungsvorgangs auf die Klappe 47 gedrückt und diese löst bei Annäherung an einen Mikroschalter 50 ein auf ein als Hydraulikzylinder ausgebildetes Antriebsglied 51 des Verdeckgestells 7 (Fig. 5) rückgekoppeltes Signal aus und beendet so den Schließvorgang.

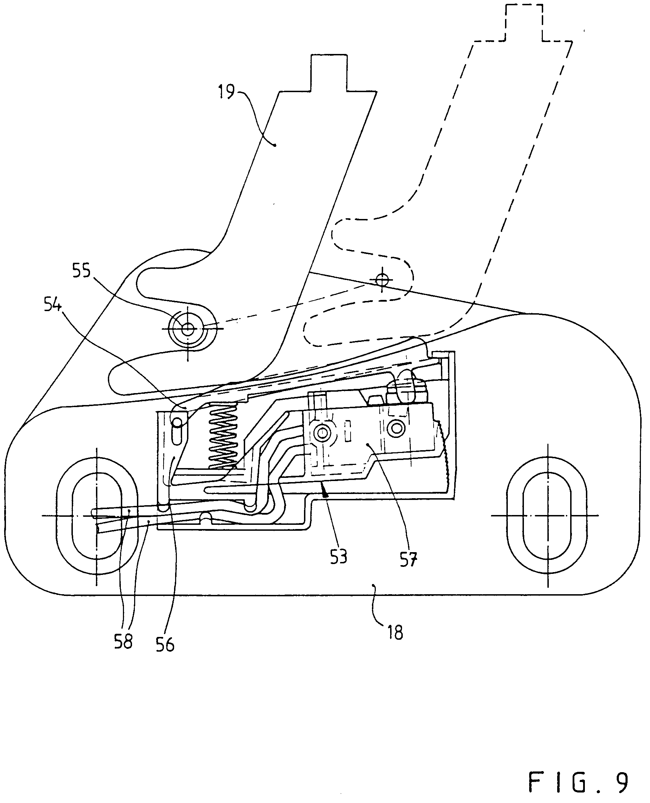

Zusätzlich zu der vorbeschriebenen Verschlußvorrichtung 12 ist der Verdeckkastendeckel 6 mit zwei in Fig. 9 in einer vergrößerten Einzeldarstellung dargestellten Fanghaken 19 versehen, die in ein entsprechendes Gegenlager 18 am seitlichen Heckbereich (Fig. 4) einführbar sind. Die in strichpunktierter Darstellung veranschaulichten Verbindungsstellungen des Fanghakens 19 verdeutlichen, daß dieser beim Schließvorgang des Verdeckkastendeckels 6 über eine einen elektrischen Kontaktgeber 53 aufweisende Schaltzunge 54 mit einem am Gegenlager 18 befindlichen Fangbolzen 55 in einen Verbindungseingriff eingeführt wird. Damit ist der Verdeckkastendeckel 6 sowohl über die Betätigungsvorrichtung 15 bzw. die mit dieser in funktionalem Zusammenhang stehende Verschlußvorrichtung 12 als auch zusätzlich über die Fanghaken 19 in einer Sicherungsstellung positioniert.

Über die Schaltzunge 54 wird dabei mittels eines federelastisch abgestützten Adapters 56 in einem Mikroschalter 57 ein Signal erzeugt, daß beim Schließvorgang des Verdeckkastendeckels 6 den weiteren Antrieb stoppt bzw. beim Öffnungsvorgang des Faltverdecks 2 ein entsprechendes Freigabesignal für die weitere Steuerung des Verdeckkastendeckels 6 über entsprechende elektrische Verbindungsleitungen 58 weitergibt.

## Patentansprüche

1. Versenkbares Faltverdeck für Cabriolet-Fahrzeuge mit einem Verdeckgestell (7), das einen den unteren Abschluß des Verdeckes (2) bildenden Verdeckstoffspannbügel (8), einen das gefaltete Verdeck (2) aufnehmenden Verdeckkasten (10) und einen diesen jeweils schließendei bzw. öffnenden Verdeckkastendeckel (6) umfaßt, wobei dieser über eine karosserieseitig abgestützte Schwenkhalterung (16) in eine Schließstellung schwenkbar und in dieser das Faltverdeck (2) über zumindest ein am Verdeckstoffspannbügel (8) befindliches und in eine jeweilige Verschlußvorrichtung (12) eingreifendes Schließteil (13) in einer Auflagestellung auf dem Verdeckkastendeckel (6) festgelegt ist, **dadurch gekennzeichnet,** daß der Verdeckkastendeckel (6) mit einer Betätigungsvorrichtung (15) versehen ist, die diesem während des Schließvorgangs im Bereich der Schwenkhalterung (16) zumindest phasenweise eine horizontale Steuerbewegung vermittelt, derart, daß das Schließteil (13) des Verdeckstoffspannbügels (8) von der Verschlußvorrichtung (12) ergriffen und das Faltverdeck (2) mit Vorspannung in die Auflagestellung verbringbar ist.

2. Versenkbares Faltverdeck nach Anspruch 1, dadurch gekennzeichnet, daß der Verdeckkastendeckel (6) mittels der Betätigungsvorrichtung (15) beim Schließvorgang in eine die Bewegungsbahn des Schließteils (13) kreuzende Klappstellung schwenkbar ist, in der das Schließteil (13) in einer jeweiligen Rastöffnung (17) von der Verschlußvorrichtung (12) erfaßt und in dieser Verbindungsstellung das Faltverdeck (2) und der Verdeckkastendeckel (6) gemeinsam über dessen Schwenk/Schub-Bewegung in die den Verdeckstoff (3) spannende Auflagestellung verbringbar sind.

3. Versenkbares Faltverdeck nach Anspruch 1 oder 2, dadurch gekennzeichnet, daß der Verdeckkastendeckel (6) mit zwei an dessen vorderen Randbereichen symmetrisch zur Fahrzeuglängsachse (21) angeordneten und in der Schließstellung in jeweils ein karosserieseitig gehaltenes Gegenlager (18) eingreifenden Fanghaken (19) versehen ist.

4. Versenkbares Faltverdeck nach einem der Ansprüche 1 bis 3, dadurch gekennzeichnet, daß die Betätigungsvorrichtung (15) mit einem innenseitig im Bereich der Fahrzeuglängsachse (21) am Karosserieheck (22) abgestützten Umlenkhebel (23) versehen ist, der an einem ersten freien Schenkel (24) ein zum Verdeckkastendeckel (6) hin gerichtetes Verbindungsglied (25) aufweist, das über jeweils senkrecht zur Fahrzeuglängsachse (21) abragende Querstreben (26,27) mit einerseits randseitig am Karosserieheck (22) abgestützten und andererseits den Verdeckkastendeckel (6) haltenden Parallelogramm-Scharnieren (16) verbunden ist und der Umlenkhebel (23) an einem zweiten freien Schenkel (24') ein Antriebsglied (31) aufweist.

5. Versenkbares Faltverdeck nach Anspruch 4, dadurch gekennzeichnet, daß der umlenkhebel (23) im Bereich des ersten freien Schenkels (24') mit einem direkt und/oder über einen Bowdenzug (36) am Antriebsglied (31) angelenkten Übertragungshebel (33) versehen ist, dessen Bewegungsbereich über ein Anschlagteil (34) begrenzt ist.

6. Versenkbares Faltverdeck nach Anspruch 4 oder 5, dadurch gekennzeichnet, daß der Umlenkhebel (23) im Bereich des Verbindungsglieds (25) mit den beiden Querstreben (26,27) gleichzeitig eine reversible Drehbewegung vermittelnden Gleitpaarungsteilen (35) versehen ist und die äußeren Endbereiche der Querstreben (26,27) mit den Parallelogramm-Scharnieren (16) unter Bildung jeweiliger Scharnierdorne (37) verbunden sind.

7. Versenkbares Faltverdeck nach einem der Ansprüche 4 bis 6, dadurch gekennzeichnet, daß die Parallelogramm-Scharniere (16) jeweils mit einer am Verdeckkastendeckel (6) festgelegten Halteplatte (39), einem von dieser abragenden Verbindungshebel (40) mit randseitigen Steuerhebeln (41,42) und einem zwischen diesen befindlichen Zughebel (43) versehen sind, der gemeinsam mit den Steuerhebeln (41,42) schwenkbeweglich am Karosserieheck (22) abgestützt ist.

8. Versenkbares Faltverdeck nach einem der Ansprüche 1 bis 7, dadurch gekennzeichnet, daß die Verschlußvorrichtung (12) als ein den Schließteil (13) über eine mit einem Mikroschalter (50) verbundene Klappe (47) aufnehmender Verriegelungstopf (48) ausgebildet ist.

9. Versenkbares Faltverdeck nach einem der Ansprüche 1 bis 8, insbesondere nach Anspruch 3, dadurch gekennzeichnet, daß jeder Fanghaken (19) über eine einen elektrischen Kontaktgeber (53) aufweisende Schaltzunge (54) mit einem am Gegenlager (18) befindlichen Fangbolzen (55) in Verbindungseingriff verbringbar ist.

10. Versenkbares Faltverdeck nach einem der Ansprüche 1 bis 9, dadurch gekennzeichnet, daß der Verdeckkastendeckel (6) bei im Verdeckkasten (10) befindlichem Faltverdeck (2) sowohl über die Betätigungsvorrichtung (15) als auch über die jeweiligen Fanghaken (19) in seiner Abdeckstellung festgelegt ist.

## Claims

1. A stowable folding top for a cabriolet vehicle, with a framework (7) which comprises a top-fabric tensioning member (8) which forms the bottom closure member of the soft top (2), a box (10) which holds the folded top (2) and, for closing or opening the box (10), a cover (6) which, by means of a pivot mounting (16) supported on the vehicle body, is able to pivot into a closed position, in which the folding top (2) is fixed in a position in which it rests on the cover (6) via at least one closure member (13) disposed on the top-fabric tensioning member (8) and engaging a respective locking device (12), characterised in that the box cover (6) is provided with an actuating device (15) which, during the closing process, imparts to the cover (6) at least phasewise and in the region of the pivot mounting (16) a controlling movement, such that the closure member (13) of the top-fabric tensioning member (8) is gripped by the locking device (12) and the folding top (2) can be brought with initial tension into the resting position.

2. A stowable folding top according to claim 1, characterised in that the box cover (6) can, by means of the actuating device (15) be pivoted during the closing process into a folded position which crosses the path of movement of the closure member (13), in which folded position the closure member (13) is gripped by the locking device (12) in a respective catch aperture (17) and, in this connection position, the folding top (2) and the box cover (6) can be moved jointly via their pivot/push movement into the resting position which tensions the top-fabric (3).

3. A stowable folding top according to claim 1 or 2, characterised in that the box cover (6) has at its front marginal portions and symmetrically in relation to the longitudinal axis (21) of the vehicle catch hooks (19) which in the closed position engage mating mountings (18) supported on the body work.

4. A stowable folding top according to one of claims 1 to 3, characterised in that the actuating device (15) has, mounted on the rear (22) of the body, on the inside and in the region of the longitudinal axis (21) of the vehicle, a reversing lever (23) which has on a first free arm (24) and directed towards the box cover (6) a connecting member (25) which is connected via cross-struts (26, 27) projecting at right-angles to the longitudinal axis (21) of the vehicle and having parallelogram hinges (16) which are at one end supported on the vehicle rear (22) and holding the box cover (6) at the other, the reversing lever (23) having a drive member (31) on a second free arm (24').

5. A stowable folding top according to claim 4, characterised in that the reversing lever (23) is in the region of the first free arm (24') provided with a transmission lever (33) articulated directly and/or via a bowden cable (36) on the drive member (31) and a range of movement of which is limited by an abutment part (34).

6. A stowable folding top according to claim 4 or 5, characterised in that the reversing lever (23) is in the region of the connecting member (25) provided with sliding pairing parts (35) which simultaneously impart a reversible rotary movement to both cross-struts (26, 27) at the same time, the outer end portions of the cross-struts (26, 27) being connected to the parallelogram hinges (16) to form respective hinge pins (37).

7. A stowable folding top according to one of claims 4 to 6, characterised in that the parallelogram hinges (16) are each provided with a holding plate (39) fixed on the box cover (6), a connecting lever (40) projecting from the plate (39) and having marginally disposed control levers (41, 42) and, disposed between these latter, tensioning levers (43) which are supported on the body work rear (22) for pivoted movement jointly with the control levers (41, 42).

8. A stowable folding top according to one of claims 1 to 7, characterised in that the locking device (12) is constructed as a pot-shaped interlocking device (48) which accommodates the closure member (13) via a flap (47) which is connected to a microswitch (50).

9. A stowable folding top according to one of claims 1 to 8, particularly according to claim 3, characterised in that each catch hook (19) can be brought into a connecting engagement with a catch bolt (55) disposed on the mating mounting (18) via a switching tongue (54) which comprises an electrical contactor (53).

10. A stowable folding top according to one of claims 1 to 9, characterised in that the box cover (6), when the folding top (2) is stowed inside the box (10), is secured in its covered position both by means of the actuating device (15) and also by the respective catch hooks (19).

## Revendications

1. Toit pliant escamotable que l'on peut abaisser pour un véhicule cabriolet avec un châssis de capote (7), qui comprend un arceau (8) servant à tendre l'étoffe de la capote formant la fermeture inférieure de la capote (2), un caisson de capote (10) recevant la capote repliée (2) et un couvercle de caisson de capote fermant ou ouvrant respectivement celui-ci, capote dans le cas de laquelle celui-ci peut pivoter dans une position de fermeture au moyen d'un support de pivotement (16) prenant appui du côté de la carrosserie et la capote pliante (2) est fixée dans cette position de fermeture au moyen d'au moins une pièce de fermeture (13), se trouvant sur l'arceau (8), qui sert à tendre l'étoffe de la capote, et venant en prise dans un dispositif correspondant de fermeture (12) dans une position d'appui sur le couvercle du caisson de la capote (6), capote pliante que l'on peut abaisser,
caractérisé en ce que
le couvercle du caisson de la capote (6) est pourvu d'un dispositif d'actionnement (15), qui imprime à ce couvercle pendant le processus de déploiement de la capote dans la zone du support de pivotement (16) au moins par phase sur le mouvement horizontal de commande, tel que la pièce de fermeture (13) de l'arceau (8) qui sert à tendre l'étoffe de la capote, est saisie par le dispositif de fermeture (12) et qu'on peut mettre la capote pliante (2) en précontrainte dans la position d'appui.

2. Toit pliant escamotable que l'on peut abaisser selon la revendication 1,
caractérisé en ce que
le couvercle du caisson de la capote (6) peut pivoter au moyen du dispositif d'actionnement (15) lors du processus de fermeture dans une position de repliement qui croise le trajet de la pièce de fermeture (13), position dans laquelle la pièce de fermeture (13), saisie dans une ouverture correspondante d'encliquetage (17) par le dispositif de fermeture (12) et le couvercle du caisson de la capote (6) peuvent être mis ensemble au moyen de leur mouvement de pivotement et de translation dans la position d'appui tendant l'étoffe de la capote (3).

3. Toit pliant escamotable que l'on peut abaisser selon la revendication 1 ou 2,
caractérisé en ce que
le couvercle du caisson de la capote (6) est pourvu de deux crochets (19) disposés sur son bord antérieur de façon symétrique par rapport à l'axe longitudinal du véhicule (21) et qui viennent en prise, en position de fermeture, dans respectivement un contre-appui (18) de maintien du côté de la carrosserie.

4. Toit pliant escamotable que l'on peut abaisser selon l'une des revendications 1 à 3,
caractérisé en ce que
le dispositif d'actionnement (15) est pourvu d'un levier de renvoi (23) qui prend appui du côté intérieur dans la zone de l'axe longitudinal du véhicule (21) sur le hayon de la carrosserie (22), levier de renvoi (23) qui présente sur une première branche (24) libre un organe de liaison (25) orienté en direction du couvercle du caisson de la capote (6), organe qui est relié au moyen respectivement de traverses (26, 27), faisant saillie perpendiculairement à l'axe longitudinal du véhicule (21), à des charnières (16) en forme de parallélogramme prenant appui d'une part du côté du bord sur le hayon de la carrosserie (22) et d'autre part maintenant le couvercle du caisson de la capote (6) et en ce que le levier de renvoi (23) présente sur une deuxième branche libre (24') un organe d'entraînement (31).

5. Toit pliant escamotable que l'on peut abaisser selon la revendication 4,
caractérisé en ce que le levier de renvoi (23) est pourvu dans la zone de la première branche libre (24') d'un levier de transmission (33) articulé directement et/ou par l'intermédiaire d'un câble Bowden (36) sur l'organe d'entraînement (31), levier de transmission (33) dont le débattement est limité par une pièce de butée (34).

6. Toit pliant escamotable que l'on peut abaisser selon la revendication 4 ou 5,
caractérisé en ce que
le levier de renvoi (23) est pourvu dans la zone de l'organe de liaison (25) avec les deux traverses (26, 27) en même temps de pièces appariées (35) imprimant un mouvement de rotation réversible et en ce que les extrémités extérieures des traverses (26, 27) sont reliées aux charnières en forme de parallélogramme (16) en formant des goujons de charnière correspondants (37).

7. Toit pliant escamotable que l'on peut abaisser selon l'une des revendications 4 à 6,
caractérisé en ce que
les charnières en forme de parallélogramme (16) sont pourvues respectivement d'une plaque de maintien fixée sur le couvercle du caisson de la capote (6), d'un levier de liaison (40), faisant saillie à partir de celle-ci, avec des leviers de commande (41, 42) du côté du bord et d'un levier de traction (43) se trouvant entre ceux-ci, levier de traction (43) qui prend appui en même temps que les leviers de commande (41, 42) de façon à pouvoir pivoter sur le hayon de la carrosserie (22).

8. Toit pliant escamotable que l'on peut abaisser, selon l'une des revendications 1 à 7,
caractérisé en ce que
le dispositif de fermeture (12) est constitué comme un pot de verrouillage (48) recevant la pièce de fermeture (13) au moyen d'un clapet (47) relié à un micro-interrupteur (50).

9. Toit pliant escamotable que l'on peut abaisser selon l'une des revendications 1 à 8, en particulier selon la revendication 3,
caractérisé en ce que
chaque crochet (19) peut être mis au moyen d'une languette de contact (54) présentant un contacteur électrique (53) en prise avec un goujon (55) se trouvant sur le contre-appui (18).

10. Toit pliant escamotable selon l'une des revendications 1 à 9,
caractérisé en ce que
le couvercle du caisson de la capote (6) est fixé quand la capote pliante (2) se trouve dans le caisson de capote (10) à la fois au moyen du dispositif d'actionnement (15) et au moyen aussi des crochets correspondants (19) dans sa position de recouvrement.
